# FASCICULE DE BREVET EUROPEEN

(11) **EP 3 606 773 B1**
(45) Date de publication et mention de la délivrance du brevet: **28.04.2021**
(21) Numéro de dépôt: 18715205.3
(22) Date de dépôt: 16.03.2018
(51) Int. Cl.: B60H 1/00, B60N 3/10, B60R 7/04, B60H 1/32

(54) **INSTALLATION DE CHAUFFAGE/CLIMATISATION POUR L'ALIMENTATION D'UN ESPACE D'ACCUEIL DE VÉHICULE EN AIR RÉFRIGÉRÉ AYANT DES TEMPÉRATURE ET DÉBIT CONTRÔLÉS**
WÄRME-/KLIMATISIERUNGSEINHEIT ZUR VERSORGUNG EINES FAHRZEUGAUFNAHMERAUMS MIT KÜHLLUFT MIT GESTEUERTER TEMPERATUR UND DURCHFLUSSRATE
HEATING/AIR CONDITIONING UNIT FOR SUPPLYING A VEHICLE RECEIVING SPACE WITH REFRIGERATED AIR HAVING A CONTROLLED TEMPERATURE AND FLOW RATE

(30) Priorité: 05.04.2017 FR 1752941
(43) Date de publication de la demande: 12.02.2020
(73) Titulaire: PSA Automobiles SA, 78300 Poissy (FR)
(72) Inventeur: PINTAT, Bruno, 92140 Clamart (FR); VANNESTE, Pascal, 78140 Velizy Villacoublay (FR); ROUSSEAU, Frederic, 28320 Gallardon (FR)
(86) Numéro de dépôt international: PCT/FR2018/050644
(87) Numéro de publication internationale: WO 2018/185392

(56) Documents cités:
- FR-A1- 2 875 177
- JP-A- 2009 051 479
- JP-U- S56 158 342
- US-A1- 2008 148 752

## Description

L'invention concerne les installations de chauffage/climatisation qui sont chargées d'alimenter en air traité l'habitacle d'un véhicule.

Certains véhicules comprennent au moins un espace d'accueil, comme par exemple une boîte à gants, pouvant être réfrigéré lorsque l'un de leurs passagers le souhaite.

Dans l'état de la technique, le document FR2875177 décrit un système de climatisation comprenant : un circuit d'air principal, un refroidisseur d'air et un radiateur de chauffage d'air adaptés pour refroidir et/ou réchauffer l'air circulant dans le circuit d'air principal et un circuit d'air auxiliaire comprenant une entrée débouchant dans le circuit d'air principal de façon à ne recevoir, en fonctionnement, que de l'air sortant du refroidisseur d'air et n'ayant pas traversé le radiateur de chauffage d'air. Selon un aspect de l'invention, le circuit d'air auxiliaire comprend au moins une sortie et au moins un accessoire munis de moyens de raccordement fluidique amovible complémentaires pour permettre le raccordement fluidique de l'accessoire à la ou chaque sortie du circuit d'air auxiliaire.

A cet effet, au moins trois solutions ont été proposées pour réaliser cette réfrigération.

Une première solution met en œuvre une technique de compression qui est indépendante de celle réalisée dans la boucle froide de l'installation de chauffage/climatisation du véhicule. Cette première solution nécessite des moyens techniques qui s'avèrent très encombrants, très onéreux et très bruyants.

Une deuxième solution met en œuvre un effet thermoélectrique. Cette deuxième solution nécessite des moyens techniques qui s'avèrent encombrants et onéreux. En outre, cette deuxième solution offre des performances limitées en présence d'une ambiance chaude dans l'habitacle du véhicule, du fait qu'elle ne permet qu'un différentiel maximal d'environ 20°C entre la température dans l'espace d'accueil (à réfrigérer) et la température dans l'habitacle.

Une troisième solution, notamment décrite dans le document brevet US 7,726,143, consiste à prélever de l'air réfrigéré en aval de l'évaporateur de la boucle froide de l'installation de chauffage/climatisation du véhicule afin d'alimenter l'espace d'accueil en air réfrigéré via un conduit d'alimentation. Cette troisième solution ne permet pas de contrôler effectivement la température à l'intérieur de l'espace d'accueil, notamment en fonction d'une consigne de température sélectionnée par un passager du véhicule. En effet, la température à l'intérieur de l'espace d'accueil dépend du régime en cours du pulseur qui alimente en air à traiter l'évaporateur, et de la température dans l'évaporateur, laquelle dépend notamment de la cylindrée en cours de sélection dans le compresseur de la boucle froide. Ainsi, lorsque la climatisation fonctionne à un faible niveau il n'est pas possible d'obtenir un air réfrigéré froid ou très froid dans l'espace d'accueil, et lorsque la climatisation fonctionne à un fort niveau il n'est pas possible d'obtenir un air réfrigéré légèrement froid ou froid dans l'espace d'accueil.

L'invention a donc notamment pour but d'améliorer la situation.

Elle propose notamment à cet effet une installation de chauffage/climatisation, d'une part, destinée à alimenter en air traité un habitacle d'un véhicule comprenant au moins un espace d'accueil, et, d'autre part, comprenant une boucle froide comportant un évaporateur et un compresseur à cylindrée variable propres ensemble à refroidir de l'air à traiter fourni par un premier pulseur, des moyens de contrôle propres à contrôler ladite cylindrée et le premier pulseur, et un conduit d'alimentation communiquant avec la boucle froide en aval de l'évaporateur et avec l'espace d'accueil pour alimenter ce dernier en air réfrigéré.

Cette installation se caractérise par le fait :
- qu'elle comprend également un second pulseur à débit d'air variable et installé entre deux parties du conduit d'alimentation, et
- que ses moyens de contrôle sont propres à contrôler la cylindrée et le débit d'air délivré par le second pulseur afin d'alimenter l'espace d'accueil en air réfrigéré ayant une température et un débit d'air choisis en fonction d'une consigne de température sélectionnée par un passager du véhicule, d'une estimée de la température à l'intérieur de l'espace d'accueil et d'un débit d'air fourni par le premier pulseur.

Grâce à ce second pulseur à débit variable combiné à la possibilité de régler la cylindrée du compresseur, il est désormais possible de contrôler assez précisément la température à l'intérieur de l'espace d'accueil, quel que soit le niveau de fonctionnement de la climatisation.

L'installation selon l'invention peut comporter d'autres caractéristiques qui peuvent être prises séparément ou en combinaison, et notamment :
- elle peut comprendre un capteur de température installé dans l'espace d'accueil et propre à fournir aux moyens de contrôle l'estimée de la température à l'intérieur de l'espace d'accueil ;
- ses moyens de contrôle peuvent être propres à contrôler la cylindrée et le débit d'air délivré par le second pulseur en fonction d'une différence entre la consigne de température et l'estimée de la température à l'intérieur de l'espace d'accueil, du débit d'air fourni par le premier pulseur et d'une estimée de la température à l'intérieur de l'évaporateur ;
- ses moyens de contrôle peuvent être propres à contrôler la cylindrée et le débit d'air délivré par le second pulseur en fonction également d'une perte de charge induite par les deux parties du conduit d'alimentation ;
- lorsque le véhicule est situé dans une zone où règne un climat tempéré, ses moyens de contrôle peuvent être propres à faire fonctionner le premier pulseur selon un régime minimal et le second pulseur selon un régime maximal ;
- lorsque le véhicule est situé dans une zone où règne un climat chaud, ses moyens de contrôle peuvent être propres à faire fonctionner le premier pulseur selon un régime maximal et le second pulseur selon un régime minimal.

L'invention propose également un véhicule, éventuellement de type automobile, et comprenant un habitacle, au moins un espace d'accueil, et une installation de chauffage/climatisation du type de celle présentée ci-avant et propre à alimenter en air traité l'habitacle et l'espace d'accueil.

Par exemple, l'espace d'accueil peut être choisi parmi une boîte à gants communiquant avec l'habitacle et un porte gobelet(s) installé à l'intérieur de l'habitacle.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant un exemple de réalisation d'une installation de chauffage/ climatisation selon l'invention propre à alimenter en air traité un habitacle et un espace d'accueil, et
- la figure 2 illustre schématiquement et fonctionnellement, dans une vue en coupe dans un plan horizontal, un exemple de réalisation d'un espace d'accueil propre à être alimenté en air réfrigéré par une installation de chauffage/climatisation selon l'invention.

L'invention a notamment pour but de proposer une installation de chauffage/climatisation IC destinée à équiper un véhicule V comprenant au moins un habitacle H et au moins un espace d'accueil EA à réfrigérer.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule, terrestre, maritime (ou fluvial), ou aérien, dès lors qu'il comprend au moins un habitacle et au moins un espace d'accueil à réfrigérer.

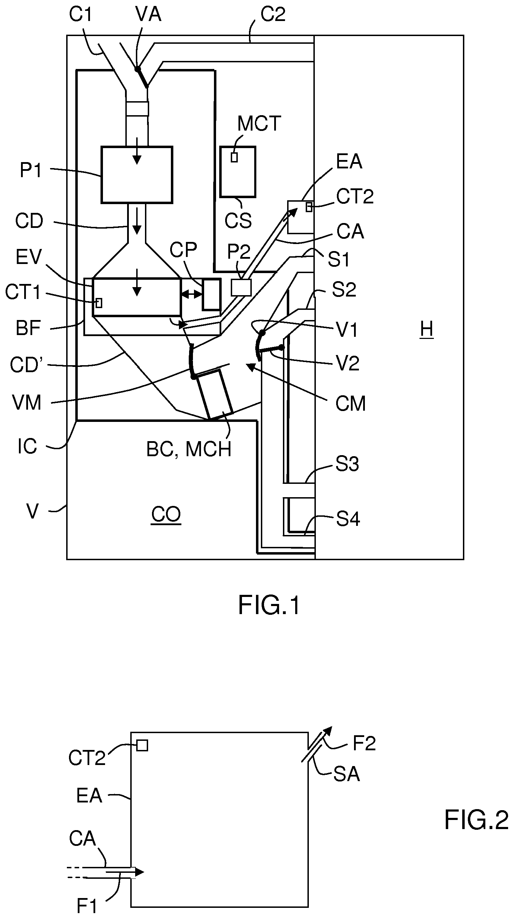

On a schématiquement et fonctionnellement représenté sur la figure 1 un exemple de véhicule V comprenant un habitacle H, un espace d'accueil EA, et un exemple de réalisation d'une installation de chauffage/climatisation IC selon l'invention.

Dans l'exemple illustré non limitativement sur la figure 1, l'espace d'accueil EA est une boîte à gants qui communique avec l'habitacle H, éventuellement via une porte. Mais dans une variante de réalisation, l'espace d'accueil EA pourrait être un porte gobelet(s) installé à l'intérieur de l'habitacle H, par exemple dans une console centrale ou sous un accoudoir installé(e) entre des sièges avant ou bien dans une portière latérale.

L'installation (de chauffage/climatisation) IC est ici implantée dans le compartiment moteur CO du véhicule V et destinée à alimenter l'habitacle H en air traité. Elle comprend notamment un premier pulseur P1, une boucle froide (ou boucle de climatisation) BF, un conduit d'alimentation CA, un second pulseur P2, un volet d'alimentation VA, une boucle chaude (ou boucle de chauffage) BC, un volet de mixage VM, des volets de distribution Vj, et un calculateur CS comprenant des moyens de contrôle MCT.

Le calculateur CS gère l'installation IC.

Le premier pulseur P1 est alimenté en air issu de l'extérieur de l'habitacle H et/ou en air issu de l'intérieur de l'habitacle H (ou air recirculé (ou recyclé)) par le volet d'alimentation (ou d'entrée d'air) VA. L'air extérieur est issu d'un premier conduit d'alimentation C1, et l'air recirculé est issu de l'habitacle H via un second conduit d'alimentation C2. Le débit d'air fourni par le premier pulseur P1 dépend du niveau de puissance qui a été automatiquement calculé par le calculateur CS (et plus précisément par ses moyens de contrôle MCT), ou bien choisi (et éventuellement programmé) par un passager du véhicule V au moyen d'un organe de commande qui est installé dans l'habitacle H, généralement dans la planche de bord.

La position du volet d'alimentation VA, et donc les proportions d'air extérieur et d'air recirculé qui alimentent l'installation IC (et notamment son premier pulseur P1), est/sont contrôlée(s) par le calculateur CS (et plus précisément par ses moyens de contrôle MCT).

La boucle froide BF est alimentée en air par le premier pulseur P1 via un conduit CD.

La boucle froide BF comporte notamment un évaporateur EV (traversé par l'air (à traiter) qui est issu du premier pulseur P1), un compresseur CP à cylindrée variable, ainsi qu'un condenseur et un circuit dans lequel circule un fluide frigorigène et qui est couplé à l'évaporateur EV, au compresseur CP et au condenseur.

L'évaporateur EV et le compresseur CP sont propres ensemble à refroidir de l'air à traiter fourni par le premier pulseur P1.

La cylindrée du compresseur CP est contrôlée par les moyens de contrôle MCT. Elle permet de fixer la température à l'intérieur de l'évaporateur EV. Comme illustré, ce dernier (EV) peut, par exemple, comprendre un premier capteur de température CT1 chargé d'estimer (et plus précisément de mesurer) sa température interne et de transmettre ses estimées (ou mesures) de température au calculateur CS.

La sortie de l'évaporateur EV est couplée à un conduit CD' qui alimente ici, d'une part, une chambre de mixage CM présentant une première entrée dont l'accès est contrôlé par le volet de mixage VM, et, d'autre part, la boucle chaude BC dont l'accès est contrôlé par le volet de mixage VM et la sortie alimente une seconde entrée de la chambre de mixage CM.

La boucle chaude BC comprend des moyens de chauffage MCH destinés à chauffer l'air qui est issu (ici) de l'évaporateur EV et qui est destiné à l'habitacle H du véhicule V, éventuellement après un mélange avec de l'air moins chaud présent dans la chambre de mixage CM.

La chambre de mixage CM est connectée à des conduits qui sont, ici, destinés à alimenter des bouches de distribution Sk placées dans l'habitacle H du véhicule V (et ici au nombre de quatre (k = 1 à 4)). L'accès à ces conduits est contrôlé par les volets de distribution Vj (ici au nombre de deux (j = 1 ou 2), mais il pourrait y en avoir plus, par exemple trois ou quatre).

Le volet de mixage VM est destiné à contrôler la répartition de l'air, qui est fourni par le volet d'alimentation VA (et qui a ici traversé l'évaporateur EV), entre la chambre de mixage CM et les moyens de chauffage MCH. Il permet donc de mélanger (ou mixer) de façon contrôlée une partie de l'air qui a traversé la boucle froide BF (éventuellement en fonctionnement) et l'air qui a traversé la boucle chaude BC. Sa position dépend du mode de fonctionnement de l'installation IC.

Le mode de fonctionnement de l'installation IC, pour ce qui concerne le chauffage et la climatisation de l'habitacle H, est choisi par un passager du véhicule V ou par le calculateur CS (éventuellement en fonction de choix effectué(s) par un passager du véhicule V).

Le second pulseur P2 est à débit d'air variable.

Le conduit d'alimentation CA comprend deux parties couplées entre elles par l'intermédiaire du second pulseur P2. Plus précisément, une première partie du conduit d'alimentation CA comprend une première extrémité qui communique avec la boucle froide BF en aval de l'évaporateur EV (ici dans le conduit CD' en amont du volet de mixage VM), et une seconde extrémité opposée à sa première extrémité et alimentant une entrée du second pulseur P2. Une seconde partie du conduit d'alimentation CA comprend une première extrémité couplée à une sortie du second pulseur P2, et une seconde extrémité opposée à sa première extrémité et couplée à une entrée de l'espace d'accueil EA pour alimenter ce dernier (EA) en air réfrigéré (flèche F1 de la figure 2).

Les moyens de contrôle MCT sont propres à (ou agencés pour) contrôler la cylindrée du compresseur CP et le débit d'air délivré par le second pulseur P2, afin d'alimenter l'espace d'accueil EA (flèche F1) en air réfrigéré ayant une température et un débit qui sont choisis en fonction d'une consigne de température sélectionnée par un passager du véhicule V, d'une estimée de la température à l'intérieur de l'espace d'accueil EA et du débit d'air fourni par le premier pulseur P1.

On comprendra qu'en contrôlant le débit d'air délivré par le second pulseur P2 et la cylindrée du compresseur CP, on peut désormais contrôler assez précisément la température à l'intérieur de l'espace d'accueil EA, quel que soit le niveau de fonctionnement de la climatisation de l'habitacle H. En effet, même en présence d'un climat tempéré à l'extérieur du véhicule V, on peut régler la cylindrée du compresseur CP afin d'alimenter l'espace d'accueil EA avec un air ayant une température froide ou très froide.

Il est important de noter que la consigne de température sélectionnée n'est pas forcément une valeur. Il peut en effet s'agir d'une température sélectionnée parmi plusieurs prédéfinies par le constructeur du véhicule V et appelées, par exemple, « température minimale », « température moyenne » et « température maximale ».

On notera que l'installation IC peut, comme illustré non limitativement sur les figures 1 et 2, comprendre un second capteur de température CT2 installé dans l'espace d'accueil EA et propre à fournir aux moyens de contrôle MCT l'estimée de la température à l'intérieur de l'espace d'accueil EA. On comprendra qu'en présence d'une telle option l'estimée de la température à l'intérieur de l'espace d'accueil EA est une mesure réelle. En variante, en l'absence d'un second capteur de température CT2, la température à l'intérieur de l'espace d'accueil EA peut être estimée par le calcul, par exemple en fonction de la température de l'air injecté dans l'espace d'accueil EA (connue grâce au premier capteur de température CT1) et du débit d'air injecté dans l'espace d'accueil EA (fonction des premier P1 et second P2 pulseurs).

Plusieurs modes de contrôle (ou régulation) peuvent être mis en œuvre par les moyens de contrôle MCT.

A titre d'exemple, les moyens de contrôle MCT peuvent être propres à contrôler la cylindrée du compresseur CP et le débit d'air délivré par le second pulseur P2 en fonction d'une différence entre la consigne de température et l'estimée de la température à l'intérieur de l'espace d'accueil EA, du débit d'air fourni par le premier pulseur P1 et d'une estimée de la température à l'intérieur de l'évaporateur EV. En présence d'un premier capteur de température CT1, l'estimée de la température à l'intérieur de l'évaporateur EV est une mesure réelle et donc précise.

Le mode de contrôle (ou régulation) décrit dans le paragraphe précédent est une boucle de régulation dans laquelle on appelle « erreur » la différence entre la consigne de température et l'estimée de la température à l'intérieur de l'espace d'accueil EA. Par exemple, lorsque l'erreur est nulle (ou comprise entre 0°C et -2°C) les moyens de contrôle MCT peuvent déclencher l'arrêt du second pulseur P2 (ainsi qu'éventuellement l'arrêt du compresseur CP (notamment dans le cas d'un climat tempéré)), afin d'optimiser la consommation nécessaire à la réfrigération de l'espace d'accueil EA. Afin de conserver le plus longtemps possible la température dans l'espace d'accueil EA, ce dernier (EA) pourra comprendre des moyens d'isolation.

Mais d'autres modes de contrôle pourraient être utilisés.

On notera que les moyens de contrôle MCT peuvent être aussi propres à contrôler la cylindrée du compresseur CP et le débit d'air délivré par le second pulseur P2 en fonction également d'une perte de charge induite par les deux parties du conduit d'alimentation CA. Cette perte de charge peut être facilement estimée en fonction, au moins, des longueurs, sections et courbures respectives des deux parties du conduit d'alimentation CA. Cette option est particulièrement avantageuse car elle permet d'adapter le contrôle effectué par les moyens de contrôle MCT en fonction de l'agencement du conduit d'alimentation CA et de la distance séparant ses deux extrémités opposées, lesquels peuvent varier d'un véhicule à l'autre, notamment pour ce qui concerne l'encombrement sous la planche de bord et la distance séparant le conduit CD' de l'espace d'accueil EA.

Lorsque les premier P1 et second P2 pulseurs ne comprennent qu'un un régime minimal de fonctionnement offrant un débit d'air minimal (par exemple d'environ 150 kg/h) et un régime maximal de fonctionnement offrant un débit d'air maximal (par exemple d'environ 500 kg/h), outre le régime nul quand ils sont non utilisés, on peut envisager les exemples de réglages suivants.

Par exemple, lorsque le véhicule V est situé dans une zone où règne un climat tempéré, les moyens de contrôle MCT peuvent être propres à faire fonctionner le premier pulseur P1 selon un régime minimal et le second pulseur P2 selon un régime maximal pour assurer un débit d'air satisfaisant dans l'espace d'accueil EA. La cylindrée du compresseur CP est alors choisie en fonction de la température de consigne sélectionnée. Par exemple, avec une cylindrée minimale, la température de l'air réfrigéré en sortie de l'évaporateur EV est de l'ordre de 10°C, et donc la température de l'air réfrigéré et prélevé par le conduit d'alimentation EA est de l'ordre de 12°C à l'entrée de l'espace d'accueil EA. Par conséquent, si la température de consigne sélectionnée est inférieure à 12°C, la cylindrée du compresseur CP doit être augmentée.

Egalement par exemple, lorsque le véhicule V est situé dans une zone où règne un climat chaud, les moyens de contrôle MCT peuvent être propres à faire fonctionner le premier pulseur P1 selon un régime maximal et le second pulseur P2 selon un régime minimal pour assurer un débit d'air satisfaisant dans l'espace d'accueil EA à réfrigérer. La cylindrée du compresseur CP est alors choisie en fonction de la température de consigne sélectionnée. Par exemple, avec une cylindrée maximale (habituellement choisie pour réfrigérer l'habitacle H), la température de l'air réfrigéré en sortie de l'évaporateur EV est de l'ordre de 3°C, et donc la température de l'air réfrigéré et prélevé par le conduit d'alimentation EA est de l'ordre de 5°C à l'entrée de l'espace d'accueil EA, ce qui est généralement suffisant pour assurer une réfrigération maximale correspondant à une température minimale dans l'espace d'accueil EA.

On notera également, comme illustré non limitativement sur la figure 2, qu'afin de favoriser la réfrigération de l'espace d'accueil EA quand il est fermé par une porte, il est avantageux de prévoir sur une paroi de cet espace d'accueil EA une sortie SA destinée à permettre l'évacuation d'air réfrigéré (flèche F2), éventuellement dans l'habitacle H.

On notera également que les moyens de contrôle MCT peuvent être réalisés sous la forme de modules logiciels (ou informatiques ou encore « software »), ou bien d'une combinaison de circuits électroniques (ou « hardware ») et de modules logiciels.

L'invention offre plusieurs avantages, parmi lesquels :
- un encombrement très limité par rapport aux solutions connues de l'art antérieur, du fait qu'elle ne nécessite « physiquement » qu'un second pulseur combiné à des moyens techniques préexistants,
- une performance de réfrigération supérieure à celle offerte par un dispositif thermoélectrique de réfrigération dédié qui ne permet que l'obtention d'un différentiel maximal de 20°C entre la température dans l'habitacle et la température dans l'espace d'accueil,
- un faible bruit comparé à celui produit par les dispositifs de réfrigération mettant en œuvre une technique de compression indépendante de celle réalisée dans la boucle froide de l'installation de chauffage/climatisation,
- la possibilité d'avoir toujours du froid dans l'espace d'accueil, y compris lorsque le compresseur ne fonctionne pas par climat froid, du fait que l'on prélève l'air réfrigéré en sortie de l'évaporateur,
- un faible cout du fait que le niveau du débit d'air fourni par le premier pulseur est une information accessible et que l'évaporateur est généralement associé à un premier capteur de température,
- un contrôle fin de la température dans l'espace d'accueil.

## Revendications

1. Installation de chauffage/climatisation (IC) destinée à alimenter en air traité un habitacle (H) d'un véhicule (V) comprenant au moins un espace d'accueil (EA), ladite installation (IC) comprenant i) une boucle froide (BF) comportant un évaporateur (EV) et un compresseur (CP) à cylindrée variable propres ensemble à refroidir de l'air à traiter fourni par un premier pulseur (P1), ii) des moyens de contrôle (MCT) propres à contrôler ladite cylindrée et ledit premier pulseur (P1), et iii) un conduit d'alimentation (CA) communiquant avec ladite boucle froide (BF) en aval dudit évaporateur (EV) et avec ledit espace d'accueil (EA) pour alimenter ce dernier (EA) en air réfrigéré, **caractérisée en ce qu'**elle comprend en outre un second pulseur (P2) à débit d'air variable et installé entre deux parties dudit conduit d'alimentation (CA), et **en ce que** lesdits moyens de contrôle (MCT) sont propres à contrôler ladite cylindrée et ledit débit d'air délivré par ledit second pulseur (P2) afin d'alimenter ledit espace d'accueil (EA) en air réfrigéré ayant une température et un débit d'air choisis en fonction d'une consigne de température sélectionnée par un passager dudit véhicule (V), d'une estimée de la température à l'intérieur dudit espace d'accueil (EA) et d'un débit d'air fourni par ledit premier pulseur (P1).

2. Installation selon la revendication 1, **caractérisée en ce qu'**elle comprend un capteur de température (CT2) installé dans ledit espace d'accueil (EA) et propre à fournir auxdits moyens de contrôle (MCT) ladite estimée de la température à l'intérieur dudit espace d'accueil (EA).

3. Installation selon l'une des revendications 1 et 2, **caractérisée en ce que** lesdits moyens de contrôle (MCT) sont propres à contrôler ladite cylindrée et ledit débit d'air délivré par ledit second pulseur (P2) en fonction d'une différence entre ladite consigne de température et ladite estimée de la température à l'intérieur dudit espace d'accueil (EA), dudit débit d'air fourni par ledit premier pulseur (P1) et d'une estimée de la température à l'intérieur dudit évaporateur (EV).

4. Installation selon l'une des revendications 1 à 3, **caractérisée en ce que** lesdits moyens de contrôle (MCT) sont propres à contrôler ladite cylindrée et ledit débit d'air délivré par ledit second pulseur (P2) en fonction également d'une perte de charge induite par lesdites deux parties du conduit d'alimentation (CA).

5. Installation selon l'une des revendications 1 à 4, **caractérisée en ce que**, lorsque ledit véhicule (V) est situé dans une zone où règne un climat tempéré, lesdits moyens de contrôle (MCT) sont propres à faire fonctionner ledit premier pulseur (P1) selon un régime minimal et ledit second pulseur (P2) selon un régime maximal.

6. Installation selon l'une des revendications 1 à 5, **caractérisée en ce que**, lorsque ledit véhicule (V) est situé dans une zone où règne un climat chaud, lesdits moyens de contrôle (MCT) sont propres à faire fonctionner ledit premier pulseur (P1) selon un régime maximal et ledit second pulseur (P2) selon un régime minimal.

7. Véhicule (V) comprenant un habitacle (H) et au moins un espace d'accueil (EA), **caractérisé en ce qu'**il comprend en outre une installation de chauffage/climatisation (IC) selon l'une des revendications précédentes, propre à alimenter en air traité ledit habitacle (H) et ledit espace d'accueil (EA).

8. Véhicule selon la revendication 7, **caractérisé en ce que** ledit espace d'accueil (EA) est choisi parmi une boîte à gants communiquant avec ledit habitacle (H) et un porte gobelet(s) installé à l'intérieur dudit habitacle (H).

9. Véhicule selon l'une des revendications 7 et 8, **caractérisé en ce qu'**il est de type automobile.

## Patentansprüche

1. Heiz-/Klimaanlage (IIC) zur Versorgung eines Innenraums (H) eines Fahrzeugs (V) mit behandelter Luft mit mindestens einem Aufnahmeraum (EA), wobei die Anlage (IC) i) eine Kälteschleife (BF) mit einem Verdampfer (EVV) und einem Kompressor (CP) mit veränderlichem Hubraum umfasst, der zur Kühlung der durch die durch Luft geliefert wird Ein erster Pulsor (P1), ii) Steuermittel (MCT) zur Steuerung des Hubraums und des ersten Pulsors (P1) und iii) eine Zufuhrleitung (CA), die mit der Kälteschleife (BF) stromabwärts des Verdampfers (EVV) und mit dem Aufnahmeraum (EA) zur Versorgung des Kälteluft kommuniziert, **dadurch gekennzeichnet, dass** sie ferner einen zweiten Pulsor (P2) mit variabler Luftströmung umfasst, der zwischen zwei Teilen der Zufuhrleitung (CA) installiert ist, und dass die Steuermittel (MCT) geeignet sind, den Hubraum und die von dem zweiten Pulsor (P2) zugeführte Luftmenge zu steuern, um den Aufnahmeraum (EA) mit gekühlter Luft zu versorgen Temperatur und Luftdurchsatz, die auf der Grundlage eines von einem Fahrzeuginsassen des Fahrzeugs (V) ausgewählten Temperatursollwertes, einer Schätzung der Temperatur innerhalb des Aufnahmeraums (EA) und einer von dem ersten Pulsor (P1) gelieferten Luftmenge ausgewählt werden.

2. Anlage nach Anspruch 1, **dadurch gekennzeichnet, dass** sie einen Temperatursensor (CT2) umfasst, der in dem Aufnahmeraum (EA) installiert ist und dazu geeignet ist, den Überwachungsmitteln (MCT) die Schätzung der Temperatur innerhalb des Aufnahmeraums (EA) zu liefern.

3. Anlage nach einem der Ansprüche 1 und 2, **dadurch gekennzeichnet, dass** die Steuermittel (MCT) in der Lage sind, den Hubraum und den Luftdurchsatz, der von dem zweiten Pulsor (P2) zugeführt wird, in Abhängigkeit von einer Differenz zwischen dem Temperatursollwert und der Schätzung der Temperatur innerhalb des Aufnahmeraums (EA), des Luftdurchsatzes, der von dem ersten Pulsor (Pulsor (P1) zugeführt wird, und einer Schätzung der Temperatur innerhalb des Verdampfers (EV).

4. Anlage nach einem der Ansprüche 1 bis 3, **dadurch gekennzeichnet, dass** die Steuermittel (MCT) in der Lage sind, den Hubraum und den Luftstrom, der durch den zweiten Pulsor (P2) zugeführt wird, in Abhängigkeit auch von einem Druckverlust, der durch die beiden Teile der Zufuhrleitung (CA) verursacht wird, zu steuern.

5. Anlage nach einem der Ansprüche 1 bis 4, **dadurch gekennzeichnet, dass**, wenn sich das Fahrzeug (V) in einem Bereich mit temperiertem Klima befindet, die Kontrollmittel (MCT) geeignet sind, den ersten Pulsor (P1) in einer minimalen Drehzahl und den zweiten Pulsor (P2) in einer maximalen Drehzahl zu betreiben.

6. Anlage nach einem der Ansprüche 1 bis 5, **dadurch gekennzeichnet, dass**, wenn sich das Fahrzeug (V) in einem Bereich befindet, in dem heißes Klima herrscht, die Steuermittel (MCT) geeignet sind, den ersten Pulsor (P1) in einer maximalen Drehzahl und den zweiten Pulsor (P2) in einer minimalen Drehzahl zu betreiben.

7. Fahrzeug (V) mit einem Fahrgastraum (H) und mindestens einem Aufnahmeraum (EA), **dadurch gekennzeichnet, dass** es ferner eine Heiz-/Klimaanlage (IIC) nach einem der vorhergehenden Ansprüche umfasst, die geeignet ist, die behandelte Luft dem Fahrgastraum (H) und dem Aufnahmeraum (EA) zuzuführen.

8. Fahrzeug nach Anspruch 7, **dadurch gekennzeichnet, dass** der Aufnahmeraum (EA) ausgewählt ist aus einem Handschuhkasten, der mit dem Fahrgastraum (H) kommuniziert, und einem Becherhalter, der in dem Fahrgastraum (H) installiert ist.

9. Fahrzeug nach einem der Ansprüche 7 und 8, **dadurch gekennzeichnet, dass** es vom Kraftfahrzeugtyp ist.

## Claims

1. Heating/Air Conditioning (IC) installation to feed an interior (H) of a vehicle (V) with at least one home space (EA), that installation (IC) consisting of (i) a cold loop (BF) with an evaporator (EV) and a variablecylinder compressor (CP) capable of cooling air to be treated by a first pulsor (P1), (ii) means of control (MCT) capable of controlling the said cylinder and the said first pulsor (P1), and (iii) a power duct (CA) communicating with the said cold loop (BF) in downstream of the said evaporator (EV) and with the said space of home (EA) to fed the latter (EA) in refrigerated air, **characterized in that** it also includes a second pulsor (P2) (b) to rate variable air treaty and installed enter two section of the said set duct (AC), and in so far as the said means of (MCT) are capable of controlling the said cylinder and the said air delivered by the said second pulsor (P2) in order to the said refrigerated air (EA) having a temperature and an air chosen according to an temperature by a passenger of the said vehicle (), an of the temperature within the said (EA) and an air supplied by the said first pulsor (P1).

2. Installation according to Claim 1, characterized as it includes a temperature sensor (CT2) installed in the said home space (EA) and capable of providing the said means of control (MCT) with the said estimated temperature within the said home space (EA).

3. Installation according to one of claims 1 and 2, characterized as such means of control (MCT) are capable of controlling the said cylinder and the said air flow rate issued by the said second pulsor (P2) in relation to a difference between the said temperature record and the said estimated temperature within the said reception area (EA), the said air flow rate provided by the said first pulsor (P1) and an estimated temperature of the temperature inside the said evaporator (EV).

4. Installation according to one of the claims 1 to 3, **characterized in that** the said means of control (MCT) are capable of controlling the said cylinder and the said air flow rate issued by the said second pulsor (P2) also in relation to a loss of load caused by the said two parts of the supply duct (AC).

5. Installation according to one of claims 1 to 4, characterized that, where the vehicle (V) is located in a temperate climate zone, the said means of control (MCT) are capable of operating the first pulsor (P1) according to a minimum regime and the second pulsor (P2) according to a maximum regime.

6. Installation according to one of claims 1 to 5, characterized that, where the said vehicle (V) is located in a hot climate area, the said means of control (MCT) are capable of operating the said first pulsor (P1) at a maximum speed and the said second pulsor (P2) at a minimum speed.

7. Vehicle (V) consisting of a passenger compartment (H) and at least one reception area (EA), **characterized by** the addition of a heating/air conditioning system (IC) according to one of the preceding claims, capable of supplying air treated that passenger compartment (H) and the said reception area (EA).

8. Vehicle according to Claim 7, **characterized by** the fact that the said reception area (EA) is chosen from a glove box communicating with the said passenger compartment (H) and a cup holder(s) installed inside the said passenger compartment (H).

9. Vehicle according to one of claims 7 and 8, characterized as automotive type.
